# EUROPÄISCHE PATENTSCHRIFT

(11) **EP 1 378 404 B1**
(45) Veröffentlichungstag und Bekanntmachung des Hinweises auf die Patenterteilung: **11.01.2006**
(21) Anmeldenummer: 03013325.0
(22) Anmeldetag: 13.06.2003
(51) Int. Cl.: B60R 21/20

(54) **Gassackmodul**
Airbag module
Module d'airbag

(30) Priorität: 04.07.2002 DE 10230140
(43) Veröffentlichungstag der Anmeldung: 07.01.2004
(73) Patentinhaber: TRW Automotive Safety Systems GmbH, 63743 Aschaffenburg (DE)
(72) Erfinder: Kayser, Jens, 63863 Eschau (DE)
(74) Vertreter: Kitzhofer, Thomas

(56) Entgegenhaltungen:
- EP-A- 0 773 142
- DE-A- 4 141 906
- DE-U- 20 104 044
- DE-U- 20 219 284

## Beschreibung

Die Erfindung betrifft ein Gassackmodul für eine Fahrzeuginsassenrückhaltevorrichtung, gemäß dem Oberbegriff des Anspruchs 1.

Um die Sicherheit von Gassäcken zu erhöhen, die über pyrotechnische Gasgeneratoren befüllt werden, kann unter anderem vorgesehen sein, das aus dem Gasgenerator ausströmende Gas von Partikeln zu befreien. Durch das Durchströmen des Filters wird auch die Temperatur des in den Gassack gelangenden Gases herabgesetzt.

Ziel der Erfindung ist es, eine derartige Funktion mit einem kostengünstigen und einfach zu fertigenden Gassackmodul zu erreichen.

Dies wird erfindungsgemäß dadurch die Merkmale des Anspruchs 1 erreicht. Im Stand der Technik hatte der Diffusor stets Ausströmöfmungen, die sehr groß waren, wobei keine Filterfunktion vorgesehen war. Damit wurden auch im Diffusor keine bei der Verbrennung von pyrotechnischem Material freigesetzten Partikel zurückgehalten.

In der gattungsgemäßen DE-A-41 41 906 ist ein Gasgenerator von einem topfförmigen Filtergehäuse und zusätzlich einem topfförmigen Diffusorgehäuse umgeben, durch die das aus dem Gasgenerator ausströmende Gas fließt. Das Diffusorgehäuse besteht aus Metallblech und hat einen Ring von Ausströmöffnungen. Vor den Ausströmöffnungen ist innenseitig eine Filteranordnung aus mehreren Schichten z.B. aus Maschenmetallgewebe angeordnet.

Die Erfindung sieht vor, daß der topfförmige Diffusor, der üblicherweise aus einer Seitenwand, einem Deckel sowie einem an dem dem Deckel entgegengesetzten Rand der Seitenwand nach außen vorstehenden ringförmigen Flansch besteht, zur Kühlung und zum Filtern des Gases herangezogen wird. Damit muß im Inneren des Gasgenerators, der ein geschlossenes Außengehäuse aufweist, entweder ein Filter geringeren Ausmaßes oder überhaupt kein Filter mehr vorgesehen sein. Die gute Filterwirkung des Diffusors wird dadurch erzielt, daß der Filterabschnitt aus einer oder mehreren Fasern besteht, beispielsweise aus einem Textil, Maschengestrick, Gewirk oder Gewebe oder einem Vlies oder einer ungeordneten Verbindung von einer oder mehreren Fasern.

Gemäß einer ersten und bevorzugten Ausführungsform ist zumindest der gesamte topfförmige Abschnitt, bevorzugt sogar der gesamte Diffusor, aus dem aus einer oder mehreren Fasern bestehenden Material, also dem Textil oder dergleichen.

Gemäß einer zweiten Ausführungsform ist nur die Seitenwand des topfförmigen Abschnitts aus dem aus einer oder mehreren Fasern bestehenden Material.

Die bevorzugte Ausführungsform sieht, wie bereits erwähnt, vor, daß der gesamte Diffusor aus dem aus einer oder mehreren Fasern bestehenden Material gebildet ist. Es hat sich überraschend gezeigt, daß ein derartiges Material, insbesondere Gewebe oder Gestrick, formstabil genug ist, um die Funktion z.B. eines Gassackträgers zu übernehmen.

Hierdurch bieten sich mehrere Vorteile. Die Zahl der Bauteile wird reduziert, da kein Träger zusätzlich zum externen Filter vorgesehen werden muß. Gleichzeitig werden Gewicht und Baugröße des Gassackmoduls reduziert. Ein weiterer Vorteil liegt darin, daß Standard-Gasgeneratoren eingesetzt werden können, auch bei Gelegenheiten, bei denen bei geringem Platzangebot eine zusätzliche Filterung des Gases gewünscht wird.

Der topfförmige Abschnitt des Diffusors kann den Gasgenerator wenigstens teilweise umgeben und gleichzeitig als Abstandhalter für den Gasgenerator zur Wandung des Gassacks dienen.

Das Material, insbesondere das Maschengestrick oder Gewebe, ist so ausgelegt, daß es als Partikelfilter für durchströmendes Gas wirkt, z.B. indem die Maschengröße und der Drahtdurchmesser entsprechend gewählt werden oder indem mehrere Lagen von Maschengestrick übereinander verwendet werden. Hier ist es besonders von Vorteil, wenn der Diffusor von aus dem Gasgenerator in den Gassack strömenden Gas großflächig durchströmt werden kann, da sich so eine optimale Filterwirkung erzielen läßt.

Das Material, insbesondere das Maschengestrick oder Gewebe, kann außerdem für eine gleichmäßige Verteilung des aus dem Gasgenerator austretenden Gases sorgen. Durch die Auslegung des Filtermaterials des topfförmigen Abschnitts kann auch Einfluß auf die Geschwindigkeit, mit der das Gas in den Gassack einströmt, genommen werden, um eine Abstimmung der Rückhaltevorrichtung vorzunehmen.

Es ist zwar besonders vorteilhaft, wenn der Diffusor als Partikelfilter dient, es ist aber auch möglich, ein grobmaschiges Maschengestrick oder Gewebe mit großem Faserabstand zu verwenden, welches lediglich den Kontakt des Gasgenerators mit der Wandung des Gassacks verhindert und z.B. als Auflagefläche und Träger für den Gassack im zusammengelegten Zustand dient.

Bevorzugt besteht das Material aus Metalldrahtfasern.

In einer vorteilhaften Ausführung der Erfindung ist der topfförmige Abschnitt des Diffusors als Deformationselement ausgelegt. Hierzu ist eine Oberseite des topfförmigen Abschnitts bevorzugt vom Gasgenerator beabstandet, so daß bei einem Aufprall eines Fahrzeuginsassen ein Teil der Aufprallenergie durch die Verformung des Diffusors abgebaut werden kann. Durch die Auslegung des Maschengestricks läßt sich die zur Deformation benötigte Energie in relativ engen Grenzen vorherbestimmen, so daß eine flexible Anpassung der Rückhaltevorrichtung möglich ist.

In einer bevorzugten Ausführungsform der Erfindung ist der Gasgenerator schwingend gelagert. Der Diffusor aus dem Fasermaterial dient in diesem Fall als sogenannter Tilgerkäfig, in dem der Gasgenerator, der als Tilgermasse zur Schwingungsdämpfung wirkt, schwingend gelagert ist. Da in einem solchen Fall ein Gasgenerator und Gassackwandung trennender Gassackträger unbedingt erforderlich ist, läßt sich durch die Verwendung eines Diffusors aus z.B. Maschengestrick oder Gewebe eine besonders hohe Raum- und Gewichtersparnis erzielen.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine perspektivische Ansicht eines Diffusors eines erfindungsgemäßen Gassackmoduls;
- Figur 2 eine schematische Schnittansicht eines erfindungsgemäßen Gassackmoduls mit dem Diffuser aus Figur 1;
- Figur 3 eine perspektivische Ansicht einer weiteren Ausführungsform des Diffusors;
- Figur 4 einen Halbschnitt durch den Diffusor nach Figur 3 längs der Linie IV-IV;
- Figur 5 eine Halbschnittansicht durch einen weiteren, nur zu Erlaüterungszwecken dargestellten Diffusor;
- Figur 6 einen Halbschnitt durch einen weiteren, nur zu Erlaüterungszwecken dargestellten Diffusor;
- Figuren 7a bis 7c Detailansichten von unterschiedlichen Materialien, die beim erfindungsgemäßen Gassackmodul im topfförmigen Abschnitt des Diffusors verwendet werden; und
- Figur 8 eine Querschnittsansicht durch einen Diffusor gemäß einer dritten, nur zu Erlaüterungszwecken dargestellten Ausführungsform.

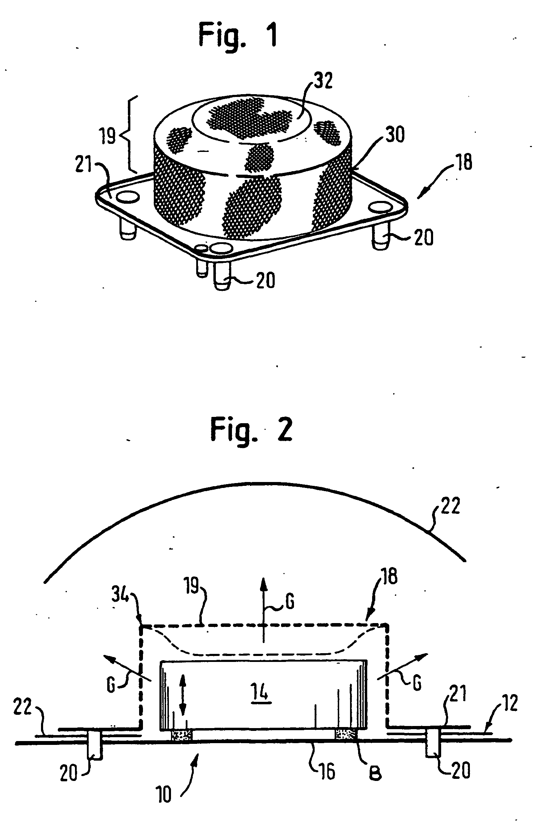

Figur 2 zeigt ein Gassackmodul 10 mit einem im aufgeblasenen Zustand gezeigten Gassack 12. Ein Gasgenerator 14 ist auf elastischen Lagern B schwingend gelagert und mit einem fahrzeugfesten Teil 16, z.B. einem Lenkrad, verbunden. Der Gasgenerator ist von einem Diffusor 18, einem sogenannten Tilgerkäfig, teilweise umgeben, der in Figur 1 im Detail dargestellt ist. Dieser Tilgerkäfig weist einen topfförmigen Abschnitt 19 mit einer zylindrischen Seitenwand 30 und einem Deckel 32 auf. Die Seitenwand 30 oder der gesamte, aus Seitenwand 30 und Deckel 32 bestehende topfförmige Abschnitt sind vollständig aus Filtermaterial gebildet. An den dem Deckel 32 abgewandten Rand der Seitenwand 30 schließt sich ein ringförmiger Flansch 21 an. Über Bolzen 20, die am Flansch 21 angreifen, ist der Diffusor 18 am fahrzeugfesten Teil 16 befestigt. Der Rand einer Einströmöffnung des Gassacks 12 ist zwischen dem Flansch des Diffusors und dem fahrzeugfesten Teil 16 eingeklemmt. Der Diffusor ist ein baulich vom Gasgenerator getrenntes Teil, das den Gasgenerator allseits mit Abstand umgibt.

Der Diffusor 18 ist zwischen dem Gasgenerator 14 und der Wandung 22 des Gassacks 12 angeordnet. Im zusammengelegten Zustand liegt der Gassack 12 auf der Oberseite des topfförmigen Abschnitts 19 auf. Die Wandung 22 des Gassacks 12 kann also an keiner Stelle in direktem Kontakt mit dem in Betrieb heißen Gasgenerator 14 kommen. Der Gasgenerator 14 ist so zum Diffusor 18 beabstandet angeordnet, dass er im Inneren des Diffusors 18 ungehindert seine Funktion als Schwingungsdämpfer wahrnehmen kann.

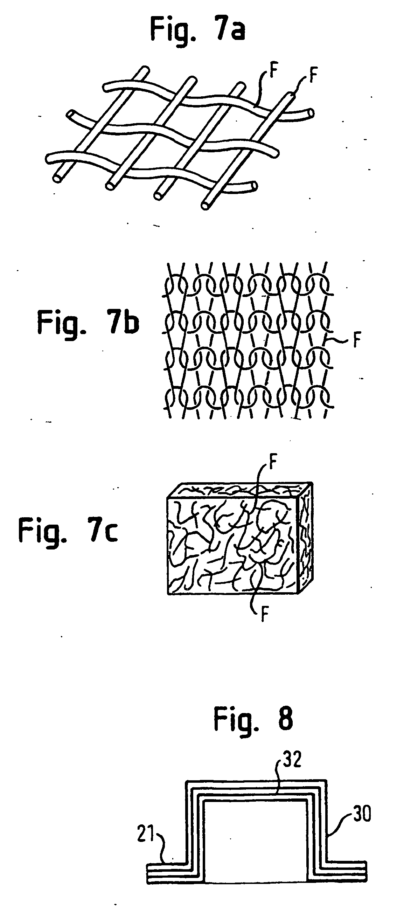

Zumindest der topfförmige Abschnitt 19 des Diffusors 18 besteht aus einem Material aus einer oder mehreren Fasern F aus Metalldraht, von denen Beispiele in den Figuren 7a bis 7c dargestellt sind. Das Material kann ein Textil sein, z.B. ein Gewebe aus Kett- und Schußfäden F (Figur 7a), ein Gewirk oder Maschengestrick aus einem oder mehreren Fäden F (Figur 7b) oder aus einer Art Vlies (Figur 7c), das aus ungeordneten Metalldrahtfasern F besteht, die ineinander verhakt sind. Bei der Ausführungsform nach Figur 1 ist der gesamte topfförmige Abschnitt 19 aus dem speziellen Material aus einem Metalldraht, und über den gesamten topfförmigen Abschnitt 19 kann Gas in das Innere des Gassacks 22 gelangen, so daß der gesamte topfförmige Abschnitt 16 einen Filterabschnitt bildet. Das Material aus Metalldraht ist so ausgebildet, daß Partikel, die im aus dem Gasgenerator 14 ausströmenden Gas G enthalten sind, herausgefiltert werden. Es ist kein weiteres Bauteil wie etwa ein aus Blech bestehender Gassackträger zwischen dem Gasgenerator 14 und der Gassackwandung 22 vorgesehen. Auch der Flansch 21 kann aus einem Maschengestrick bestehen.

Das Material des topfförmigen Abschnitts 19 kann einlagig (Figur 2) oder mehrlagig (Figur 8) ausgebildet sein.

Zusätzlich zu der Funktion als Tilgerkäfig und als Partikelfilter dient der Diffusor 18 im hier gezeigten Beispiel außerdem als Deformationselement, um z.B. den Aufprall eines Kopfs eines Fahrzeuginsassen zu dämpfen. Das Maschengestrick des topfförmigen Abschnitts 19 verformt sich, wie durch die gestrichelte . Linie in Figur 2 angedeutet, beim Aufprall eines Körperteils und baut so dessen Energie ab, um den Fahrzeuginsassen vor Verletzungen zu bewahren.

Der hier gezeigte Diffusor 18 kann natürlich auch zusammen mit einem nicht schwingend gelagerten Gasgenerator eingesetzt werden.

Der Gasgenerator muß unter Umständen kein Filter mehr aufweisen, denn diese Funktion kann eventuell komplett von dem Diffusor erfüllt werden.

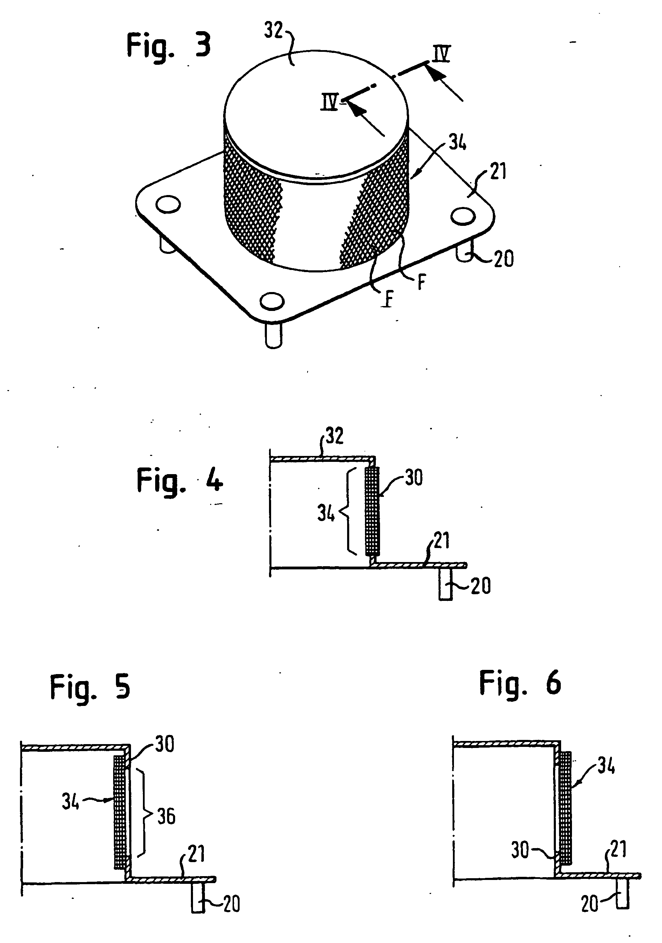

Bei der Ausführungsform nach Figur 3 sind der Flansch 21 und der Deckel 32 aus Blech. Fast die gesamte Seitenwand 30 (nur ein kurzer Steg am Deckel 32 und am Flansch 21 ausgenommen) wird durch den Filterabschnitt 34 gebildet, der aus dem erwähnten Material aus einer oder mehreren Fasern F hergestellt ist. Im konkreten Fall nach Figur 3 handelt es sich um ein Gewebe aus Metalldraht. Der Filterabschnitt ist umfangsmäßig geschlossen und stellt die einzige Brücke zwischen dem Deckel 32 und dem Flansch 21 dar, ist also lasttragend zwischen diesen Abschnitten angeordnet.

Bei dem nicht zur Erfindung gehörenden Beispiel nach Figur 5 ist dieses aus einem tiefgezogenen Blech hergestellt, das zahlreiche Ausströmöffnungen 36 im Bereich der Seitenwand 30 besitzt. Innenseitig ist ein Filterabschnitt 34 vorgesehen, der die Ausströmöffnungen 36 abdeckt und somit einen Filterabschnitt 34 im Bereich der Ausströmöffnungen 36 definiert. Hier ist das Material, das den Filterabschnitt definiert, ebenfalls aus einer oder mehreren Fasern gebildet, im vorliegenden Fall handelt es sich vorzugsweise um ein Maschengestrick oder Gewirk.

Der nicht zur Erfindung gehörende Diffusor nach Figur 6 entspricht im wesentlichen dem in Figur 5 gezeigten, mit dem Unterschied, daß das Filtermaterial nicht innenseitig, sondern außenseitig an der Seitenwand 30 anliegt.

Figur 8 zeigt noch eine weitere Ausführungsform eines Diffusors, der aus mehreren Lagen aus Gewebe, Maschengestrick und/oder Vlies besteht. Der gesamte Diffusor, d.h. auch der Flansch 21 sind aus diesem Material.

Die Herstellung des in den Figuren 1 und 8 gezeigten Diffusors erfolgt vorzugsweise aus einem ebenen Material, welches durch Tiefziehen bearbeitet wird.

## Patentansprüche

1. Gassackmodul für eine Fahrzeuginsassen-Rückhaltevorrichtung, mit einem Gasgenerator (14) und einem Gassack (12) mit einer Wandung (22) und einem den Gasgenerator (14) umgebenden Diffusor (18) mit einem topfförmigen Abschnitt (19), wobei der topfförmige Abschnitt (19) einen aus einer oder mehreren Fasern (F) bestehenden Filterabschnitt (34) aufweist, durch den das Gas aus dem Gasgenerator (14) strömt, **dadurch gekennzeichnet, daß** der Diffusor (18) ein separates, vom Gasgenerator (14) getrenntes Bauteil ist und der Filterabschnitt (34) lasttragend zwischen einem Deckel (32) und einem Flansch (21) des Diffusors (18) angeordnet ist.

2. Gassackmodul nach Anspruch 1, bei dem der Filterabschnitt (34) so ausgelegt ist, daß er als Partikelfilter für durchströmendes Gas (G) wirkt.

3. Gassackmodul nach Anspruch 1 oder 2, **dadurch gekennzeichnet, daß** der Filterabschnitt (34) aus einem Maschengestrick, Gewirk, Gewebe oder einer ungeordneten Verbindung von einer oder mehreren Fasern (F) besteht.

4. Gassackmodul nach einem der vorhergehenden Ansprüche, **dadurch gekennzeichnet, daß** der topfförmige Abschnitt (19) aus einer Seitenwand (30) und einem Deckel (32) besteht und die Seitenwand (30) aus einem aus einer oder mehreren Fasern bestehenden Material gebildet ist.

5. Gassackmodul nach einem der vorhergehenden Ansprüche, **dadurch gekennzeichnet, daß** zumindest der topfförmige Abschnitt (19), vorzugsweise der gesamte Diffusor (18) aus dem aus einer oder mehreren Fasern (F) bestehenden Material besteht.

6. Gassackmodul nach einem der vorhergehenden Ansprüche, bei dem der topfförmige Abschnitt (19) als Deformationselement ausgelegt ist.

7. Gassackmodul nach einem der vorhergehenden Ansprüche, bei dem die Faser oder Fasern (F) aus Metalldraht besteht/bestehen.

8. Gassackmodul nach einem der vorhergehenden Ansprüche, bei dem der Gasgenerator (14) schwingend gelagert ist.

9. Gassackmodul nach einem der vorhergehenden Ansprüche, **dadurch gekennzeichnet, daß** der topfförmige Abschnitt (19) randseitig einen seitlich abstehenden ringförmigen Flansch (21) aufweist, der ebenfalls aus dem aus der Faser oder den Fasern (F) gebildeten Material besteht.

10. Gassackmodul nach einem der vorhergehenden Ansprüche, **dadurch gekennzeichnet, daß** der Gasgenerator (14) kein Filter aufweist.

## Claims

1. A gas bag module for a vehicle occupant restraint device, comprising a gas generator (14) and a gas bag (12) with a wall (22) and a diffusor (18) surrounding the gas generator (14) and having a cup-shaped section (19), the cup-shaped section (19) having a filter section (34) which consists of one or more fibers (F) and through which the gas flows out of the gas generator (14), **characterized in that** the diffusor (18) is a separate component segregated from the gas generator (14), and the filter section (34) is arranged so as to be load-bearing between a cover (32) and a flange (21) of the diffusor (18).

2. The gas bag module according to Claim 1, in which the filter section (34) is designed such that it acts as a particle filter for through-flowing gas (G).

3. The gas bag module according to Claim 1 or 2, **characterized in that** the filter section (34) consists of a knitted mesh, knitted fabric, woven fabric or an irregular connection of one or more fibers (F).

4. The gas bag module according to any of the preceding claims, **characterized in that** the cup-shaped section (19) consists of a side wall (30) and of a cover (32) and **in that** the side wall (30) is formed from a material consisting of one or more fibers.

5. The gas bag module according to any of the preceding claims, **characterized in that** at least the cup-shaped section (19), preferably the entire diffusor (18), consists of the material consisting of one or more fibers (F).

6. The gas bag module according to any of the preceding claims, in which the cup-shaped section (19) is designed as a deformation element.

7. The gas bag module according to any of the preceding claims, in which the fiber or fibers (F) consist(s) of metal wire.

8. The gas bag module according to any of the preceding claims, in which the gas generator (14) is mounted so as to be able to oscillate.

9. The gas bag module according to any of the preceding claims, **characterized in that** the cup-shaped section (19) has on the edge side a laterally projecting ring-shaped flange (21), which likewise consists of the material formed from the fiber or fibers (F).

10. The gas bag module according to any of the preceding claims, **characterized in that** the gas generator (14) does not have a filter.

## Revendications

1. Module de coussin à gaz pour un système de retenue de passager de véhicule, comportant un générateur de gaz (14) et un coussin à gaz (12) avec une paroi (22) et un diffuseur (18) entourant le générateur de gaz (14) et ayant un tronçon en forme de pot (19), le tronçon en forme de pot (19) présentant un tronçon de filtre (34) constitué par une ou plusieurs fibres (F), à travers lequel s'écoule le gaz sortant du générateur de gaz (14), **caractérisé en ce que** le diffuseur (18) est un composant à part, séparé du générateur de gaz (14), et le tronçon de filtre (34) est agencé de manière à porter des charges entre un couvercle (32) et une bride (21) du diffuseur (18).

2. Module de coussin à gaz selon la revendication 1, dans lequel le tronçon de filtre (34) est conçu de telle sorte qu'il agit à la manière d'un filtre à particules pour du gaz (G) s'écoulant au travers.

3. Module de coussin à gaz selon la revendication 1 ou 2, **caractérisé en ce que** le tronçon de filtre (34) est constitué par un tricotage à mailles, un tissu à mailles, un tissu tissé ou un composé aléatoire d'une ou de plusieurs fibres (F).

4. Module de coussin à gaz selon l'une des revendications précédentes, **caractérisé en ce que** le tronçon en forme de pot (19) est constitué par une paroi latérale (30) et par un couvercle (32), et la paroi latérale (30) est formée par un matériau constitué par une ou plusieurs fibres.

5. Module de coussin à gaz selon l'une des revendications précédentes, **caractérisé en ce qu'**au moins le tronçon en forme de pot (19), de préférence le diffuseur (18) dans son ensemble, est constitué en un matériau constitué par une ou plusieurs fibres (F).

6. Module de coussin à gaz selon l'une des revendications précédentes, dans lequel le tronçon en forme de pot (19) est conçu sous forme d'élément de déformation.

7. Module de coussin à gaz selon l'une des revendications précédentes, dans lequel la fibre ou les fibres (F) est/sont en fil métallique.

8. Module de coussin à gaz selon l'une des revendications précédentes, dans lequel le générateur de gaz (14) est monté oscillant.

9. Module de coussin à gaz selon l'une des revendications précédentes, **caractérisé en ce que** le tronçon en forme de pot (19) présente côté bord une bride (21) annulaire faisant saillie latéralement, qui est également constituée par le matériau formé par la fibre ou par les fibres (F).

10. Module de coussin à gaz selon l'une des revendications précédentes, **caractérisé en ce que** le générateur de gaz (14) ne présente pas de filtre.
